# EUROPÄISCHE PATENTSCHRIFT

(11) **EP 1 313 112 B1**
(45) Veröffentlichungstag und Bekanntmachung des Hinweises auf die Patenterteilung: **17.03.2004**
(21) Anmeldenummer: 02020278.4
(22) Anmeldetag: 11.09.2002
(51) Int. Cl.: H01F 27/14

(54) **Luftentfeuchter für ölisolierte Transformatoren, Drosselspulen sowie Stufenschalter**
Air dehumidifier for oil insulated transformers, choke coils as well as tap changers
Déshumidificateur d'air pour transformateurs, inductances, ainsi que sélecteurs de prises, isolés à l'huile

(30) Priorität: 13.11.2001 DE 10155511
(43) Veröffentlichungstag der Anmeldung: 21.05.2003
(73) Patentinhaber: Messko Albert Hauser GmbH & Co. KG, 61440 Oberursel/Taunus (DE)
(72) Erfinder: Brill, Rainer, 63667 Nidda (DE); Krüger, Werner, 61203 Reichelsheim (DE); Kugler, Kurt, 93138 Hainsacker (DE); Viereck, Karsten, Dr., 93128 Regenstauf (DE)
(74) Vertreter: Meier, Gerald Heinz

(56) Entgegenhaltungen:
- DE-A- 3 413 888
- DE-U- 20 104 259
- PATENT ABSTRACTS OF JAPAN vol. 010, no. 042 (E-382), 19. Februar 1986 (1986-02-19) & JP 60 198710 A (TOSHIBA KK), 8. Oktober 1985 (1985-10-08)

## Beschreibung

Die Erfindung betrifft einen Luftentfeuchter, wie er als Zubehör bei ölisolierten Transformatoren, Drosselspulen oder Stufenschaltem zum Entfeuchten der in Ölausdehnungsgefäßen angesaugten Luft verwendet wird. Ein solcher Luftentfeuchter mit den Merkmalen des Oberbegriffes des ersten Patentanspruches ist aus der Veröffentlichung PATENT ABSTRACTS OF JAPAN vol. 010, no 042 (E-382), 19. Februar 1986 (1986-02-19) & JP 60 198710 A bekannt.

Bei ölgefüllten Transformatoren ist üblicherweise ein Ölausdehnungsgefäß vorgesehen, um die durch Temperaturänderungen verursachten Volumenänderungen des Transformatorenöls auszugleichen. Damit die angesaugte Luft nicht unzulässige Feuchtigkeit aufweist, sind regelmäßig Luftentfeuchter vorgesehen. Bei diesen Luftentfeuchtern tritt die angesaugte Luft durch eine Ölvorlage als Schutz vor Verschmutzung in den eigentlichen Luftentfeuchter ein und wird dort durch feuchtigkeitsabsorbierendes Material getrocknet.

Der grundsätzliche Aufbau solcher Luftentfeuchter ergibt sich aus der deutschen Norm DIN 42562, Teil 1 und 2, die solche Luftentfeuchter mit Kieselsäuregel zur Trocknung der angesaugten Luft beschreibt.

EP 0 245 598 befasst sich ganz allgemein mit der Anordnung von Gas- bzw. Luftpolstern, auch von mehreren.

EP 0 746 000 befasst sich mit der Verwendung von Silicagel als Feuchtefalle.

DE 34 13 071 betrifft einen Luftentfeuchter für Transformatoren der eingangs beschriebenen Art.

DE 34 13 888 beschreibt einen weiteren Luftentfeuchter mit wasserdampfabsorbierendem Granulat.

DE 196 48 208 beschreibt die Trocknung bzw. Trockenhaltung mittels eines außerhalb des eigentlichen Transformators angeordneten Stickstoffpolsters.

Die feuchtigkeitsabsorbierenden Materialien lassen sich in zwei große Gruppen einteilen: Zum einen gibt es Materialien, etwa Zeolith, die nur eine begrenzte Menge von Wasser aufnehmen können, danach in den Sättigungszustand übergehen und ihre lufttrocknenden Eigenschaften unwiederbringlich verlieren und ausgetauscht werden müssen. Zum anderen gibt es Materialien, beispielsweise seien hier Silicagel oder KC TROCKENPERLEN ORANGE genannt, die das Wasser nur physikalisch binden und bei denen durch eine Ausheizung der ursprüngliche lufttrocknende Zustand wieder hergestellt werden kann, ohne dass es eines Austausches des Mittels selbst bedarf.

Die eingangs genannte, den Oberbegriff bildende Veröffentlichung aus PATENT ABSTRACTS OF JAPAN beinhaltet diese Ausheizung des feuchtigkeitsabsorbierenden Materials. Dabei ist in einem Gehäuse feuchtigkeitsabsorbierendes Absorptionsmittel bzw. Granulat angeordnet, das von der angesaugten Luft durchströmt wird. Das feuchtigkeitsabsorbierende Absorptionsmittel bzw. Granulat ist regenerierbar und kann durch Erhitzung im gesättigten Zustand wiederholt in den feuchteaufnehmenden Zustand zurückversetzt werden. Unterhalb des Absorptionsmittels bzw. Granulats ist eine aus einer Glocke und einem Ölsumpf bestehende Ölvorlage vorgesehen, durch die die angesaugte Luft geführt ist. Das Gehäuse weist eine elektrische Heizeinrichtung auf, die durch ein Schaltmittel ansteuerbar ist.

Die DE 201 04 259 beschreibt einen weiteren Luftentfeuchter, der ein mit Steuerkontakten versehenes Überwachungsgerät zum Überwachen des Feuchtigkeitsgehaltes des feuchtigkeitsabsorbierenden Mittels aufweist. Damit kann ein bisher zeitabhängiger Austausch in einen zustandsabhängigen Austausch des Absorptionsmittels überführt werden. Sobald das Überwachungsgerät anzeigt, dass die Sättigung des Absorptionsmittels erreicht ist, wird ein Signal zum Wechseln dieses Absorptionsmittels gegeben. Bei diesem Luftentfeuchter erfolgt jedoch kein Ausheizen. Der Wechsel des Absorptionsmittels selbst ist vielmehr nach wie vor erforderlich, er kann nur zeitlich besser und genauer an die tatsächlichen Gegebenheiten, konkret die tatsächliche Sättigung mit Feuchtigkeit, angepasst werden. Es liegt auf der Hand, dass der Austausch des Absorptionsmittels umständlich ist. Die Verbindung der Ausdehnungsleitung zum Transformator muss geschlossen werden, der gesamte Luftentfeuchter muss demontiert werden, die einzelnen Kammern müssen geleert und mit neuem, frischem Absorptionsmittel gefüllt werden, wobei die Füllmenge immerhin 1,2 bis 4,8 kg betragen, das ganze also durchaus aufwändig ist.

Aufgabe der Erfindung ist es, einen verbesserten und weiter entwickelten Luftentfeuchter anzugeben, bei dem ein solcher Austausch des Absorptionsmittels nicht mehr erforderlich ist, sondern vielmehr im eingebauten Zustand ein Regenerieren dieses Mittels und damit eine Wiederherstellung der luftentfeuchtenden Funktion erfolgen kann.

Diese Aufgabe wird durch einen Luftentfeuchter mit den Merkmalen des Patentanspruches 1 gelöst. Die Unteransprüche betreffen besonders vorteilhafte Weiterbildungen der Erfindung.

Beim erfindungsgemäßen Luftentfeuchter ist im Bereich des Trocken- bzw. Absorptionsmittels eine elektrische Heizung vorgesehen, die sowohl zustands- als auch zeitabhängig angesteuert werden kann. Damit ist es, wird regenerierfähiges Absorptionsmittel verwendet, möglich, dieses Mittel, wenn es gesättigt ist, wieder aufzuheizen, damit auszutrocknen und im Ergebnis in einen Zustand zurückzuversetzen, der die erneute Feuchtigkeitsaufnahme gestattet.

Besonders vorteilhaft ist die elektrische Heizung als integrierte Widerstandsheizung im Granulatgehäuse, in dem sich das Absorptionsmittel befindet, ausgebildet.

Um sicherzustellen, dass die beim Ausheizen frei werdende Flüssigkeit ungehindert nach unten abtropfen kann, ist eine Ölvorlage oberhalb des Absorptionsmittels - anders als beim Stand der Technik - angeordnet.

Weiterhin ist es vorteilhaft, eine zusätzliche Temperaturüberwachung der Heizung, z. B. durch einen zusätzlichen Temperatursensor, der bei Überschreitung einer Grenztemperatur den Heizkreislauf abschaltet, vorzusehen, um ein Überheizen mit Sicherheit zu vermeiden.

Es ist sinnvoll, die elektrischen Anschluss- und Kontaktelemente in einem separaten Schaltgehäuse, seitlich am Luftentfeuchter angeordnet, vorzusehen. Der Feuchtesensor zur Überwachung der angesaugten Luft, die den Luftentfeuchter bereits durchlaufen hat, kann ebenfalls an diesem Schaltgehäuse befestigt werden und in das Innere des Luftentfeuchters mit seinem Messbereich ragen.

In der Verbindung zum Transformator ist ein Magnetventil sinnvoll, das während des Aufheizens diese Verbindung schließt, um ein Eindringen der heißen und damit wasserdampfgesättigten Luft in den Luftraum des Ausdehnungsgefäßes des Transformators zu verhindern. Dieses Magnetventil kann besonders vorteilhaft entweder zwischen dem Granulatgehäuse und der Ölvorlage oder auch zwischen Ölvorlage und Ausdehnungsgefäß des Transformators angeordnet sein.

Die elektrische Heizung des erfindungsgemäßen Luftentfeuchters wird in Betrieb gesetzt, wenn der Feuchtesensor Sättigung des Luftentfeuchters, d. h. einen unzulässigen Feuchtegehalt der angesaugten Luft signalisiert, also zustandsabhängig. Dies kann auch zyklisch geschehen, z. B. alle 48 Stunden, also zeitabhängig. Beide Möglichkeiten können natürlich auch kombiniert werden. Schließlich ist es auch möglich, die Heizung durch externe Informationen aus einem Transformatoren-Monitoringsystem, wie es die Anmelderin etwa unter der Bezeichnung "Transformer Management System TMS®" anbietet, anzusteuern.

Die Erfindung soll nachfolgend an Hand von Zeichnungen beispielhaft noch näher erläutert werden.
- Figur 1: zeigt einen erfindungsgemäßen vollständigen Luftentfeuchter in seitlicher, schematischer Schnittdarstellung.

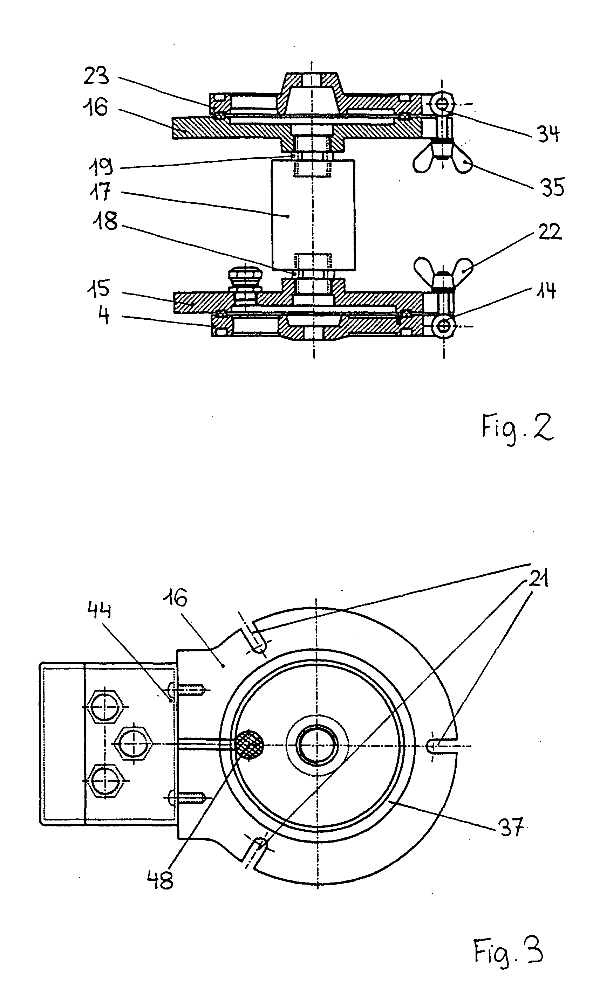

- Fig. 2: zeigt eine auszugsweise horizontale, ebenfalls schematische Schnittdarstellung des mittleren Teils mit unterem und oberem Flansch, nämlich der noch zu erläuternden Baugruppe II.
- Fig. 3: zeigt den oberen Flansch allein.

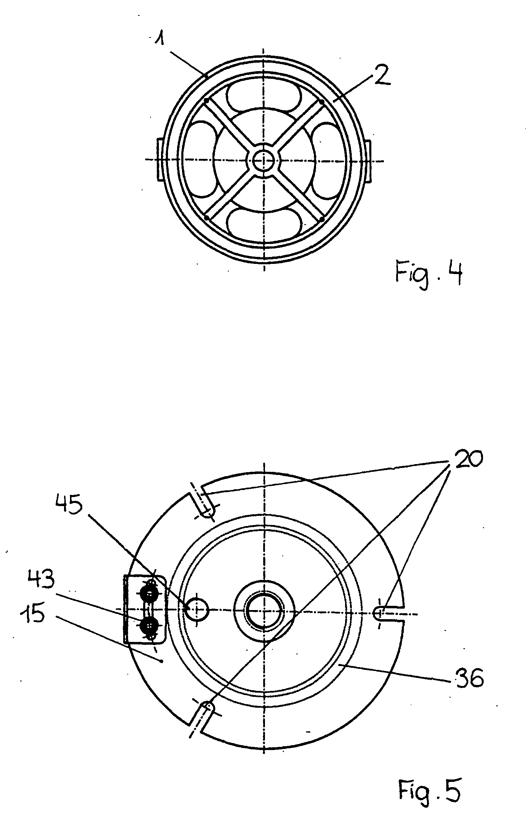

- Fig. 4: zeigt einen Bodenring allein.
- Fig. 5: zeigt den unteren Flansch allein.
- Fig. 6: zeigt einen vollständigen Luftentfeuchter, wie bereits in Figur 1 dargestellt, wobei hier zusätzlich der Weg der zu trocknenden Luft hin zum Ausdehnungsgefäß des Transformators dargestellt ist.

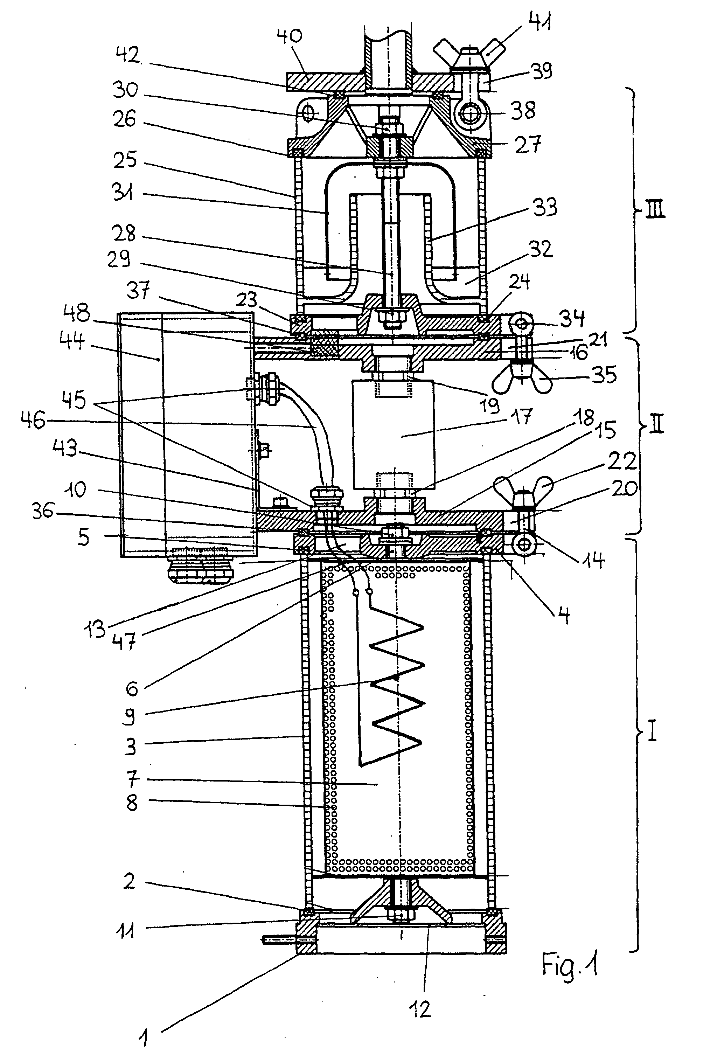

Der nachfolgend detailliert beschriebene Luftentfeuchter besteht aus drei Baugruppen, die in der Figur 1 durch seitliche Klammern mit I, II, III markiert sind.
Die erste Baugruppe I weist zunächst einmal einen Bodenring 1 auf, in dem eine Ringdichtung 2 eingelegt ist, auf der wiederum ein Zylinder 3 ruht. Nach oben wird der Zylinder 3 durch einen Zwischenboden 4 abgeschlossen, auch hier-ist zur Abdichtung eine weitere Ringdichtung 5 vorgesehen. Senkrecht durch den Zylinder 3 verläuft eine Gewindestange 6, um die herum ein mit einer entsprechenden zentrischen Längsöffnung versehenes Gehäuse 7 angeordnet ist. Das Gehäuse 7 im beschriebenen Zylinder 3 enthält ein regenerierbares Granulat 8, oder, um einen anderen Begriff zu wählen, ein regenerierbares Absorptionsmittel, sowie erfindungsgemäß eine Heizeinrichtung 9, z. B. eine Widerstandsheizeinrichtung, deren Heizelemente sich zwischen dem Granulat 8 befinden, d. h. von diesem umschlossen sind. Das Granulat 8, das auf bekannte Weise feuchtigkeitsabsorbierend ist, ist der Übersichtlichkeit halber nur andeutungsweise dargestellt. Die Befestigung erfolgt durch Muttern 10, 11 oben und unten an der Gewindestange 6. Unten ist die Baugruppe durch ein Siebblech 12 abgeschlossen, oben ist im Zwischenboden 4 eine Öffnung 13 vorgesehen. Weiterhin weist der Zwischenboden 4 noch beweglich angelenkte Augenschrauben 14 auf, auf die weiter unten noch näher eingegangen wird. Das beim Ausheizen durch die Heizeinrichtung 9 aus dem Granulat 8 frei gesetzte Wasser kann durch das Siebblech 12 ungehindert nach unten abtropfen.

Die zweite, darüber angeordnete Baugruppe II weist einen unteren Flansch 15 sowie einen oberen Flansch 16 auf, zwischen denen ein Magnetventil 17 angeordnet ist. Das Magnetventil 17 ist durch Rohrnippel 18, 19 mit dem unteren Flansch 15 sowie dem oberen Flansch 16 verbunden. Weiterhin weist der untere Flansch 15 Aussparungen 20, die im montierten Zustand mit den Augenschrauben 14 am Zwischenboden 4 korrespondieren, so dass mittels Flügelmuttern 22 der untere Flansch 15 der Baugruppe II am oberen Zwischenboden 4 der Baugruppe 1 befestigt werden kann. Ganz analog weist der obere Flansch 16 weitere Aussparungen 21 auf, die später noch erläutert werden.

Wiederum darüber angeordnet ist die nächste Baugruppe III, die unten einen weiteren Zwischenboden 23 besitzt, in dem eine Ringdichtung 24 eingelegt ist. Darauf ist ein Behälter 25 angeordnet, der oben durch eine weitere Ringdichtung 26 mit einem Deckel 27 abgeschlossen ist. Durch den Behälter 25 verläuft senkrecht wiederum eine Gewindestange 28, am unteren Ende befindet sich eine Schraube 29 zur Befestigung am Zwischenboden 23, am oberen Ende eine Schraube 30 zur Befestigung am Deckel. Im Inneren des Behälters 25 ist eine nach unten offen ausgebildete Glocke 31 vorgesehen, die bis unter die Oberfläche eines Ölsumpfes 32 reicht; dies ist die Ölvorlage. Das Volumen des Ölsumpfes 32 wird durch eine tulpenförmig ausgebildete Innenwandung 33 des Behälters 25 begrenzt. Am Zwischenboden 23 sind wiederum Augenschrauben 34 vorgesehen, die mit den bereits erläuterten Aussparungen 21 am darunter liegenden oberen Flansch 16 korrespondieren, so dass mittels Flügelmuttern 35 der Zwischenboden 23 der Baugruppe III am darunter liegenden oberen Flansch 16 der Baugruppe II befestigt werden kann. Damit sind alle drei beschriebenen Baugruppen auf einfache Weise miteinander verbunden; zwischen ihnen sind jeweils weitere Ringdichtungen 36 bzw. 37 eingelegt. Oben am Deckel 27 sind weitere Augenschrauben 38 vorgesehen, die auf ganz analoge Weise mit entsprechenden Aussparungen 39 an einem Rohrflansch 40 korrespondieren, so dass der komplette vormontierte Luftentfeuchter, bestehend aus den Baugruppen I, II, III am Rohrflansch 40 mittels weiterer Flügelmuttern 41 befestigt werden kann, wobei auch hier zur Abdichtung eine weitere Ringdichtung 42 vorgesehen ist. Der Rohrflansch 40 führt zum nicht dargestellten Ausdehnungsgefäß des Transformators.

An der bereits beschriebenen Baugruppe II ist seitlich noch ein Haltewinkel 43 vorgesehen, an dem ein Schaltgehäuse 44 angeordnet ist, das die elektrischen Anschlüsse und Verbindungsleitungen aufnimmt. In der Figur 1 sind noch Rohrverschraubungen 45 gezeigt. Vom Schaltgehäuse 44 führen elektrische Verbindungsleitungen 46 durch eine Durchführung 47 zur Heizeinrichtung 9 im Gehäuse 7. Weiterhin ist ein Feuchtesensor 48 vorgesehen, z. B. im oberen Flansch 16, so dass er derart angeordnet ist, dass er im Luftstrom des den gesamten Luftentfeuchter von unten nach oben durchströmenden Gases liegt. In der Figur 1 ist dieser Feuchtesensor 48 nur schematisch - kreuzweise schraffiert - dargestellt. Solche Feuchtesensoren sind kommerziell in unterschiedlichsten Ausführungen verfügbar und dem Fachmann geläufig.

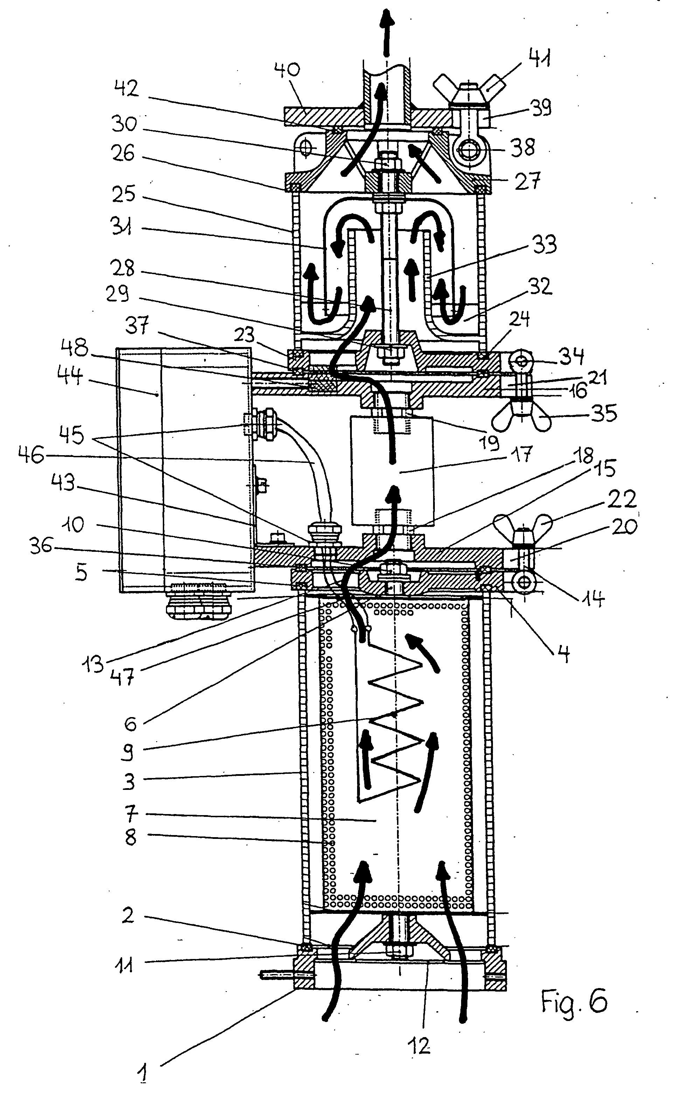

Figur 6 zeigt den Weg der Luft: Die angesaugte Luft durchläuft von unten zunächst das Gehäuse 7 mit dem Granulat 8. Bei der hier erläuterten Ausführungsform strömt die Luft an der unteren Stirnseite des Gehäuses 7 ein, durchläuft das Granulat 8 und tritt an der oberen Stirnseite wieder aus dem Gehäuse 7 aus. Im Rahmen der Erfindung sind natürlich auch andere Gehäuseausführungen möglich; z. B. ist es auch möglich, dass die Luft an der Zylinderfläche in das Gehäuse 7 eintritt, es radial nach innen durchläuft und innen wieder austritt. Die unterschiedlichsten Filter - bzw. Gehäuseanordnungen sind dem Fachmann geläufig. Nach dem Durchlaufen des Gehäuses 7 und des Granulates 8, wo sie getrocknet wird, strömt dann die Luft nach oben, durchläuft zunächst das Magnetventil 17, umströmt dann den Feuchtesensor 48 und anschließend die Glocke 31 und den Ölsumpf 32, bevor es ganz oben über den Rohrflansch 40 zum hier nicht dargestellten Ausdehnungsgefäß des Transformators weiterströmt.

Der Feuchtesensor 48, der den Feuchtezustand der getrockneten Luft, die bereits das Gehäuse 7 mit dem Granulat 8 durchlaufen hat, erfasst, kann auch an einer anderen Stelle auf dem Weg der Luft vom Gehäuse 7 hin zum Ausdehnungsgefäß des Transformators angeordnet sein.

Wie erläutert, erfasst der Feuchtesensor 48 den Feuchtezustand der ihn umströmenden Luft, die bereits getrocknet sein sollte. Wenn dieser Feuchtesensor 48 signalisiert, dass die Feuchtigkeit in dieser angesaugten Luft zu hoch ist, bedeutet dies, dass das Granulat 8 gesättigt ist, keine weitere Feuchtigkeit mehr aufnehmen kann und ausgetrocknet werden muss. Dann wird durch im Einzelnen nicht dargestellte Schaltmittel im Schaltgehäuse 44 der elektrische Kreis der Heizeinrichtung 9, vorzugsweise einer Widerstandsheizung, im Gehäuse 7 geschlossen. Gleichzeitig wird vorteilhafter Weise das Magnetventil 17 ebenfalls geschlossen. Nun wird durch die Heizeinrichtung 9 das Granulat 8 erhitzt und damit ausgetrocknet; das bisher gebundene Wasser tropft nach unten durch das Siebblech 12 ins Freie ab. Nach einer gewissen Zeit - dies kann auf einfache Weise durch eine Zeitsteuerung voreingestellt werden - schaltet sich die Heizeinrichtung 9 wieder ab und das Magnetventil 17 öffnet sich wieder. Das Granulat 8 ist dann soweit ausgetrocknet, dass es wieder aufs Neue die Feuchtigkeit in der angesaugten Luft binden kann. In vielen Fällen ist es sinnvoll, durch einen zusätzlichen Temperatursensor, der hier nicht dargestellt ist, sicherzustellen, dass während des Aufheizens und damit des Austrocknens das Gehäuse 7 nicht überhitzt werden kann.

Statt durch den beschriebenen Feuchtesensor 48 kann die Ansteuerung der Heizeinrichtung 9 auch durch ein externes Transformatoren-Monitoringsystem, durch eine Zeitschaltuhr, durch andere Schaltmittel oder auch manuell erfolgen.

Wie in Figur 1 und 6 zu sehen ist, ist bei der Erfindung die Anordnung der Glocke 31 und des Ölsumpfes 32 gegenüber dem Stand der Technik vertauscht. Während sich diese Bauteile bei den bekannten Lösungen unten befinden, sind sie beim erfindungsgemäßen Luftentfeuchter oberhalb des Gehäuses 7 angeordnet, damit, wie erläutert, das beim Ausheizen des Granulates 8 austretende Wasser frei nach unten entweichen kann, ohne in den Ölsumpf 32 zu tropfen. Im Übrigen ist die Funktion von Glocke 31 und Ölsumpf 32 hier jedoch dieselbe wie nach dem Stand der Technik.

### Bezugszeichenaufstellung

- 1: Bodenring
- 2: Ringdichtung
- 3: Zylinder
- 4: Zwischenboden
- 5: Ringdichtung
- 6: Gewindestange
- 7: Gehäuse
- 8: Granulat
- 9: Heizeinrichtung
- 10: Mutter
- 11: Mutter
- 12: Siebblech
- 13: Öffnung im Zwischenboden 4
- 14: Augenschraube
- 15: unterer Flansch
- 16: oberer Flansch
- 17: Magnetventil
- 18: Rohrnippel
- 19: Rohrnippel
- 20: Aussparung am unteren Flansch
- 21: Aussparung am oberen Flansch
- 22: Flügelmutter
- 23: Zwischenboden
- 24: Ringdichtung
- 25: Behälter
- 26: Ringdichtung
- 27: Deckel
- 28: Gewindestange
- 29: Schraube
- 30: Schraube
- 31: Glocke
- 32: Ölsumpf
- 33: Innenwandung
- 34: Augenschraube
- 35: Flügelmutter
- 36: Ringdichtung
- 37: Ringdichtung
- 38: Augenschraube
- 39: Aussparung
- 40: Rohrflansch
- 41: Flügelmutter
- 42: Ringdichtung
- 43: Haltewinkel
- 44: Schaltgehäuse
- 45: Verschraubungen
- 46: elektrische Verbindungsleitung
- 47: Durchführung
- 48: Feuchtesensor

## Patentansprüche

1. Luftentfeuchter für ölisolierte Transformatoren, Drosselspulen sowie Stufenschalter zum Entfeuchten der in Ölausdehnungsgefäßen angesaugten Luft,
wobei in einem Gehäuse (7) ein feuchtigkeitsabsorbierendes Absorptionsmittel bzw. Granulat (8) angeordnet ist, das von der angesaugten Luft durchströmt wird,
wobei das feuchtigkeitsabsorbierende Absorptionsmittel bzw. Granulat (8) ein regenerierbares, durch Erhitzung im gesättigten Zustand wiederholt in den feuchteaufnehmenden Zustand zurückversetzbares Mittel ist,
wobei eine Ölvorlage, bestehend aus Glocke (31 ) und Ölsumpf (32), vorgesehen ist, durch die die angesaugte Luft geführt ist
wobei das Gehäuse (7) eine elektrische Heizeinrichtung (9) aufweist
und wobei die elektrische Heizeinrichtung (9) durch ein Schaltmittel ansteuerbar ist,
**dadurch gekennzeichnet,**
**dass** der Luftentfeuchter einen Feuchtesensor (48) aufweist, der oberhalb des Gehäuses (7) derart angeordnet ist, dass die bereits durch das Gehäuse (7) geführte angesaugte Luft ihn umströmt,
**dass** die Ölvorlage oberhalb des Gehäuses (7) angeordnet ist, derart, dass die angesaugte Luft die Ölvorlage erst durchläuft, nachdem sie den Feuchtesensor (48) umströmt hat
und **dass** an der Unterseite des Luftentfeuchters ein Siebblech (12) vorgesehen ist, durch das die aus dem Absorptionsmittel bzw. Granulat (8) ausgeheizte Flüssigkeit nach unten abtropfen kann.

2. Luftentfeuchter nach Patentanspruch 1,
**dadurch gekennzeichnet,**
**dass** zusätzliche Mittel zur Temperaturüberwachung der elektrischen Heizeinrichtung (9) vorgesehen sind, derart, dass bei Überschreitung einer Grenztemperatur die Heizeinrichtung (9) abschaltbar ist.

3. Luftentfeuchter nach Patentanspruch 1 oder 2,
**dadurch gekennzeichnet,**
**dass** die Heizeinrichtung (9) weiterhin durch eine Zeitschalteinrichtung ansteuerbar ist.

4. Luftentfeuchter nach Patentanspruch 1 oder 2,
**dadurch gekennzeichnet,**
**dass** die Heizeinrichtung (9) durch externe Überwachungsmittel, insbesondere ein Transformatoren-Monitoringsystem, ansteuerbar ist.

## Claims

1. Air dehumidifier for oil-insulated transformers, choke coils and tap changers, for dehumidification of the air inducted into oil expansion vessels, wherein a moisture-absorbent absorption medium or granulate (8) is arranged in a housing (7) flowed through by the inducted air, wherein the moisture-absorbent absorption medium or granulate (8) is a regeneratable medium repeatedly restorable to the moisture-receiving state by heating in the saturated state, wherein an oil conservator consisting of bell (31) and oil sump (32) is provided, through which the inducted air is guided, wherein the housing (7) comprises an electrical heating device (9) and wherein the electrical heating device (9) is controllable in drive by a switching means, **characterised in that** the air dehumidifier comprises a moisture sensor (48) which is arranged above the housing (7) in such a manner that the inducted air already guided through the housing (7) flows around the sensor, that the oil conservator is arranged above the housing (7) in such a manner that the inducted air flows through the oil conservator only after it has flowed around the moisture sensor (48) and that a sieve plate (12) through which the liquid heated out of the absorption medium or granulate (18) can drip downwardly is provided at the underside of the air dehumidifier.

2. Air dehumidifier according to claim 1, **characterised in that** additional means for temperature monitoring of the electrical heating device (9) are provided in such a manner that on exceeding of a limit temperature the heating device (9) can be switched off.

3. Air dehumidifier according to claim 1 or 2, **characterised in that** the heating device (9) is additionally controllable in drive by a time switching device.

4. Air dehumidifier according to claim 1 or 2, **characterised in that** the heating device (9) is controllable in drive by external monitoring means, particularly a transformer monitoring system.

## Revendications

1. Déshumidificateur d'air pour transformateurs, inductances, ainsi que sélecteurs de prises, isolés à l'huile, pour déshumidifier l'air aspiré dans les conservateurs d'huile, dans lequel
un produit absorbant, on un granulat (8) absorbant l'humidité est disposé dans un boîtier (7) traversé par l'air aspiré, le produit absorbant ou le granulat (8) absorbant l'humidité se régénérant et pouvant par chauffage revenir de l'état saturé à son état absorbeur d'humidité,
il est prévu un collecteur d'huile composé d'une cloche (31) et d'un carter à huile (32) et qui guide l'air aspiré, et
le boîtier (7) comporte un dispositif de chauffage (9),
**caractérisé en ce que**
le déshumidificateur d'air comporte un capteur d'humidité (48) placé au-dessus du boîtier (7) de manière à ce que l'air aspiré ayant déjà traversé le boîtier (7) puisse l'entourer,
le collecteur d'huile est disposé au-dessus du boîtier (7) de manière à n'être traversé par l'air aspiré qu'après avoir entouré le capteur d'humidité (48), et
un plateau perforé (12), au travers duquel le liquide chauffé sortant du produit absorbant et/ou du granulat (8) peut s'égoutter vers le bas, est prévu sur la partie inférieure du déshumidificateur d'air.

2. Déshumidificateur d'air selon la revendication 1,
**caractérisé en ce que**
des produits supplémentaires sont prévus pour contrôler la température du dispositif de chauffage électrique (9) de manière à couper le dispositif de chauffage (9) si une température limite est dépassée.

3. Déshumidificateur d'air selon la revendication 1 ou 2,
**caractérisé en ce que**
le dispositif de chauffage (9) est en outre commandé par un programmateur.

4. Déshumidificateur d'air selon la revendication 1 ou 2,
**caractérisé en ce que**
le dispositif de chauffage (9) peut être commandé par des moyens de surveillance externes, notamment par un système de contrôle des transformateurs.
